# EUROPÄISCHE PATENTANMELDUNG

(11) **EP 1 537 777 A1**
(43) Veröffentlichungstag der Anmeldung: **08.06.2005**
(21) Anmeldenummer: 04020646.8
(22) Anmeldetag: 31.08.2004
(51) Int. Cl.: A01K 5/00, B01F 15/00

(54) **Sicherheitssystem für selbstladende Mischwagen**

(30) Priorität: 02.12.2003 DE 20318641 U
(71) Anmelder: Trioliet Mullos B.V., 7575 BE Oldenzaal (NL)
(72) Erfinder: van der Plas, Nicolaas, 7576 WX Oldenzaal (NL)
(74) Vertreter: Grünecker, Kinkeldey, Stockmair & Schwanhäusser Anwaltssozietät

(57) **Zusammenfassung**

Bei einem Sicherheitssystem eines selbstladenden Mischwagens (M); der wenigstens eine über die Zapfwelle (Z) antreibbare Mischschnecke (1)aufweist, wobei wenigstens eine sicherheitsrelevante Komponente des Mischwagens (M) über einen Geber mit einer Steuerung (D) zum Stillsetzen der Mischschnecke bei einem Sicherheitsproblem verbunden ist, weist die Steuerung (C) einen Antriebsfreigabeteil (T1) und einen Stillstands-Einstell- und/9der Überwachungsteil (T2) auf, und ist der Antrieb der Mischschnecke (1) ausschließlich nach vorhergehendem Abstoppen der Zapfwelle (Z) mit der Steuerung (C) freigebbar und ist der absolute Stillstand der Mischschnecke (1) bis zur Freigabe einstellbar und/oder überwachbar.

## Beschreibung

Die Erfindung betrifft eine Sicherheitssystem der im Oberbegriff des Anspruchs 1 angegebenen Art.

Aufgabe des Sicherheitssystems ist es, den Antrieb der Mischschnecke oder äquivalenter Mischwerkzeuge zu unterbrechen, sobald ein Sicherheitsproblem eintritt, beispielsweise wenn bestimmte Sicherheitsabstände zu Mischwerkzeugen nicht mehr gewährleistet sind bzw. ein verletzungsträchtiger Zugang zu Mischwerkzeugen freigegeben wird.

Bei dem Sicherheitssystem in DE 298 16 856 U wird bei einer vorbestimmten Position einer sicherheitsrelevanten Komponente des Mischwagens der Antrieb über eine Kupplung unterbrochen. Wird die Komponente wieder über diese Position zurückverstellt, dann wird die Kupplung wieder eingerückt, z.B. aus funktionellen Gründen, obwohl gegebenenfalls das Sicherheitsproblem noch nicht vollständig beseitigt ist. Dieses automatische Wiederanlaufen ist aus Sicherheitsgründen nicht erwünscht.

Bei dem aus DE 20 20 6573 U bekannten Sicherheitssystem veranlasst ein Infrarotsensor als Bewegungsmelder das Ausrücken einer Kupplung im Antriebsstrang, die jedoch funktionsbedingt wieder eingerückt wird, sobald der Sensor nicht mehr anspricht. Auch hierbei kann es zum automatischen Wiederanlaufen kommen, obwohl das Sicherheitsproblem noch nicht beseitigt ist. Außerdem besteht bei den bekannten Lösungen das Problem eines auf die Mischschnecke übertragenen Restdrehmoments, durch das sich die Mischschnecke trotz einer vorgenommenen Sicherheitsabschaltung, wenn auch langsamer, weiterdreht.

Aus EP 1 293 696 A ist eine mechanische Drehmomentbegrenzungskupplung u.a. für Landmaschinen bekannt, die entweder bei Erreichen eines einstellbaren Grenzdrehmoments selbsttätig ausrückt oder durch eine Klinkensperre gesteuert ausgerückt wird. Beim Ausrücken nach Erreichen des Grenzdrehmoments wird dennoch bei rotierender Zapfwelle funktionsbedingt ein Restdrehmoment übertragen, das in einem Mischwagen zum langsamen Weiterdrehen der Mischwerkzeuge führen kann. Wird die Drehmomentbegrenzungskupplung gesteuert ausgerückt, dann ist auch der Antriebsstrang steif zu den Werkzeugen der Landmaschine stillgesetzt und wird kein Restdrehmoment übertragen. Die Drehmomentbegrenzungskupplung ist so ausgelegt, dass sie bei einem signifikanten Drehzahlabfall an der Eingangsseite selbsttätig eingerückt wird. Im Sicherheitssystem eines Mischwagens könnte bei weiterhin angetriebener Zapfwelle das automatische Wiederanlaufen der Mischwerkzeuge bedingen, obwohl das Sicherheitsproblem ggfs. noch nicht beseitigt ist.

Der Erfindung liegt die Aufgabe zugrunde, ein Sicherheitssystem der eingangs genannten Art, jedoch mit erhöhtem Sicherheitsstandard zu schaffen, bei dem jegliche Drehbewegungen der verletzungsträchtigen Mischwerkzeuge und auch ein automatisches Wiederanlaufen zuverlässig ausgeschlossen sind. Es soll die Wahrscheinlichkeit erheblich gesteigert sein, die Mischwerkzeuge erst wieder antreiben zu können, wenn das Sicherheitsproblem beseitigt ist.

Die gestellte Aufgabe wird mit den Merkmalen des Anspruchs 1 gelöst.

Da die Steuerung des Sicherheitssystems einerseits überwacht oder einstellt, dass die Mischschnecke zunächst stillgesetzt bleibt, und die Freigabe zum erneuten Antreiben des Mischwerkzeugs nur erteilt wird, wenn zuvor die Zapfwelle des Schleppers abgestoppt wurde, ergibt sich ein insgesamt erhöhter Sicherheitsstandard. Es werden sowohl ein automatisches Wiederanlaufen der Mischschnecke als auch ein langsameres Weiterdrehen unter einem Restdrehmoment ausgeschlossen. Da sich die Mischwerkzeuge erst wieder antreiben lassen, wenn zuvor die Zapfwelle abgestoppt wurde, ist die Wahrscheinlichkeit wesentlich erhöht, dass das Sicherheitsproblem beseitigt wird, ehe zum Auslaufen der Mischwerkzeuge bewusst die Zapfwelle wieder antrieben wird.

Erfindungsgemäß ist das Sicherheitssystem bewusst auf eine zusätzlich zu berücksichtigende Kondition ausgelegt, nämlich auf das erforderliche Abstoppen der Zapfwelle vor einem Wiederantrieb der Mischwerkzeuge oder der Mischschnecke, wodurch die Gefahr verringert ist, dass das Sicherheitssystem sozusagen unbewusst oder funktionsbedingt bzw. aus Nachlässigkeit überlistet wird.

Eine besonders einfache Lösung benutzt ein intelligentes BUS-System, das im Schlepper, im Schlepper und im Mischwagen, oder ggfs. nur im Mischwagen implementiert ist und bei Aktivieren des Sicherheitssystems die Zapfwelle des Schleppers abschaltet. Hierbei könnte ein besonders einfacher Antriebsstrang zur Mischschnecke verlaufen, weil jedes gemeldete Sicherheitsproblem zum sofortigen Stillsetzen und Stillhalten des Mischwerkzeugs führt, ohne dass im Mischwagen aufwendige Schaltvorgänge ausgelöst zu werden brauchen. Die beiden Teile der Steuerung des Sicherheitssystems sind zweckmäßig programmiert und lassen sich bei Anschließen des Mischwagens an den Schlepper entweder durch entsprechende Eingaben oder sogar automatisch vom Mischwagen her aktivieren. Das BUS-System, vorzugsweise ein ISO-BUS-System des Schleppers, ist von vornherein automatisch oder nach Eingabe von Informationen informiert, dass bei Anschließen eines, ggfs. bestimmten Mischwagens eine gemeldete Sicherheitsabschaltung der Mischwerkzeuge automatisch das Stillsetzen und Stillhalten der Zapfwelle des Schleppers bedingt.

Bei einer anderen Ausführungsform ist eine mechanische, verstellbare Kupplung im Antriebsstrang zur Mischschnecke vorgesehen, wobei der Antriebsfreigabeteil und der Einstell- bzw. Überwachungsteil in die Kupplung und/oder die Kupplungs-Verstellung eingegliedert sind, so dass die Kupplung nur bei gestoppter Zapfwelle einrückbar ist und auch ein Restdrehmoment von der Kupplung zur Mischschnecke unterdrückt wird.

Zweckmäßig wird diese mechanische Kupplung direkt im Antriebsstrang zwischen der Zapfwelle und der Mischschnecke angeordnet, d.h., ohne eine aufwendige Getriebekonstruktion.

Zweckmäßig ist mit der Steuerung eine Bremse oder Klinkensperre oder ein Aktuator zum Verstellen der mechanischen Kupplung verbunden. Wird ein Sicherheitsproblem gemeldet, dann wird die Kupplung z.B. mittels einer Bremse ausgerückt. Die Kupplung wird erst wieder eingerückt, wenn zuvor die Zapfwelle abgestoppt worden ist.

Günstig dient die Bremse oder Klinkensperre auch zum Stillsetzen der Mischschnecke und zum Abfangen eines eventuell entstehenden Restdrehmoments, das gegebenenfalls die Mischschnecke langsam weiterdrehen könnte, obwohl das Sicherheitsproblem noch nicht beseitigt ist.

Bei einer anderen zweckmäßigen Ausführungsform ist eine verstellbare hydraulische Lamellenkupplung in Antriebsstrang vorgesehen, und wird ein an die Steuerung angeschlossener Zapfwellen-Drehsensor benutzt, um das Abstoppen und Stillhalten der Zapfwelle permanent überwachen zu können. Gegebenenfalls ist sogar eine Restdrehmoment-Bremse vorgesehen, falls die Lamellenkupplung in ausgerücktem Zustand ein Restmoment erzeugen sollte.

Aus baulichen Gründen wird die hydraulische Lamellenkupplung günstig in einem Getriebe im Antriebsstrang zur Mischschnecke untergebracht.

Nach einem weiteren wichtigen Gesichtspunkt sind an die Steuerung des Sicherheitssystems Signalgeber von mehr als nur einer sicherheitsrelevanten Komponente des Mischwagens parallel angeschlossen, z.B. Signalgeber der Ladeklappe, der Sicherheitsabdeckung wenigstens einer Dosieröffnung, eines Not-Aus-Schalters, oder dgl. Sobald ein Signalgeber angesprochen hat, wird die Mischschnecke stillgesetzt und in stillgesetztem Zustand gehalten. Sie kann erst wieder angetrieben werden, wenn auch die Zapfwelle abgestoppt wurde.

Zweckmäßig wird die mechanische Kupplung mit einer restmomentfreien Ausrückstellung ausgebildet.

Besonders geeignet ist eine mechanische Kupplung, in der zwischen dem Eingangsund dem Ausgangsglied verlagerbare Übertragungskörper, wie Kugeln, vorgesehen sind, die sich mittels eines verstellbaren Schaltgliedes aus dem Eingriff und in den Eingriff bringen lassen. Das Schaltglied kann durch eine Rückstellfeder zur Einrückstellung beaufschlagt sein. Die Bremse, die Klinkensperre oder der Aktuator greifen am Schaltglied entgegengesetzt zur Kraft der Rückstellfeder an, um gesteuert die Ausrückstellung einzustellen. Die Rückstellfeder ist zweckmäßig eine Drehfeder, die keine nennenswerte Axialkraft auf die in der Ausrückstellung verlagerten Übertragungskörper auszuüben vermag. Diese Kupplung bietet ferner den Vorteil einer Drehmomentbegrenzung, da sie bei Erreichen eines wählbaren Grenzdrehmoments selbsttätig ausrückt.

Besonders funktionssicher ist eine Kupplungsverstellung, die vom Sicherheitssystem elektrisch, z.B. über einen magnetbetätigten Federspeicher, hydraulisch, z.B. über einen Hydraulikzylinderaktuator, oder mechanisch, z.B. über ein Gestänge oder Seilzüge, betätigbar ist.

Falls ein Hydraulikzylinderaktuator vorgesehen ist, kann dieser über ein Schaltventil aus einer eigenen Hydraulikversorgung des Sicherheitssystems gespeist werden, oder parallel an die Hydraulikversorgung eines Stellzylinders einer Komponente des Mischwagens angeschlossen sein, z.B. an den Stellzylinder der Ladeschwinge. Der zum Verstellen der Ladeschwinge aufgebaute Druck oder sogar nur der Systemdruck reicht bei weitem aus, bei Auftreten eines Sicherheitsproblems die Kupplung in die Ausrückstellung zu bringen und in dieser zu halten.

Baulich einfach wird das Schaltventil direkt hubabhängig über einen mechanischen Geber von der Komponente betätigt. Die Steuerung des Sicherheitssystems überwacht dann den weiteren Stillstandszustand im Hinblick darauf, dass ein neuerlicher Antrieb des Mischwerkzeugs erst dann erfolgen kann, wenn zuvor die Zapfwelle stillgesetzt worden ist. Zweckmäßig wird die Zapfwelle mit der Sicherheitsstillsetzung abgestoppt.

Anhand der Zeichnung werden Ausführungsformen des Erfindungsgegenstandes erläutert. Es zeigen:
- Fig. 1: eine perspektivische Druntersicht eines Mischwagens,
- Fig. 2: eine schematische Seitenansicht eines Mischwagens mit einem elektrischen Sicherheitssystem und einer mechanischen Kupplung,
- Fig. 3: eine schematische Seitenansicht eines Mischwagens mit einem hydromechanischen Sicherheitssystem und einer mechanischen Kupplung,
- Fig. 4: eine schematische Seitenansicht einer anderen Ausführungsform eines Mischwagens mit einem hydromechanischen Sicherheitssystem und einer mechanischen Kupplung,
- Fig. 5: eine schematische Seitenansicht eines Mischwagens mit einem mechanischen Sicherheitssystem und einer mechanischen Kupplung,
- Fig. 6: eine schematische Seitenansicht eines Gespanns mit einem Sicherheitssystem und einem elektronischen BUS-System,
- Fig. 7: einen Längsschnitt einer mechanischen Kupplung, und
- Fig. 8: einen Radialschnitt der Kupplung von Fig. 7.

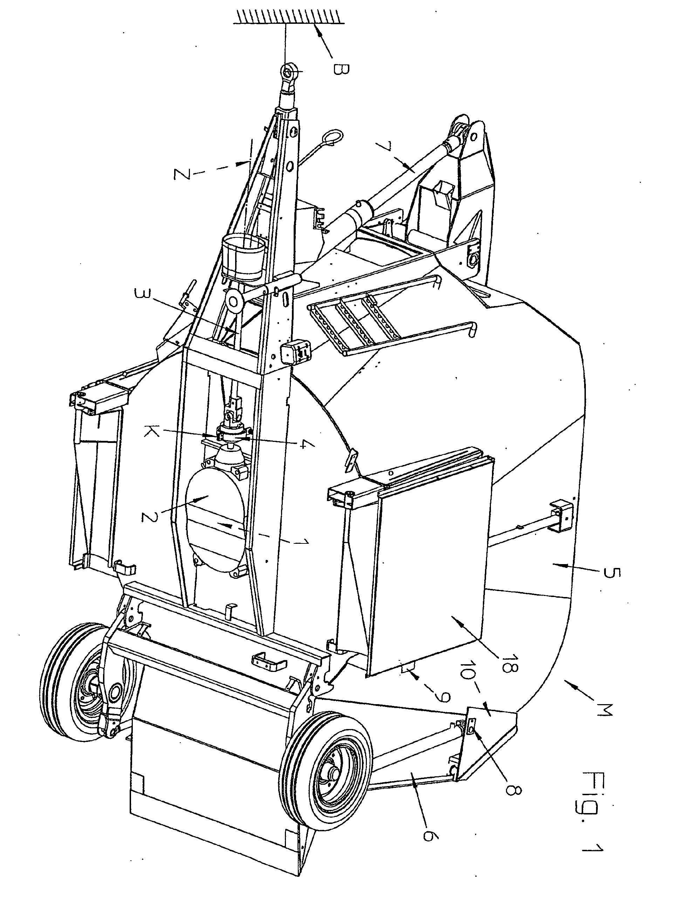

Ein selbstladender Mischwagen M in Fig. 1 ist in der gezeigten Ausführungsform an einen angedeuteten Schlepper B anhängbar, der mittels seiner Zapfwelle Z die Antriebsleistung zum Betreiben des Mischwagens M bereitstellt. Alternativ könnte der Mischwagen M auch als Selbstfahrer ausgebildet sein.

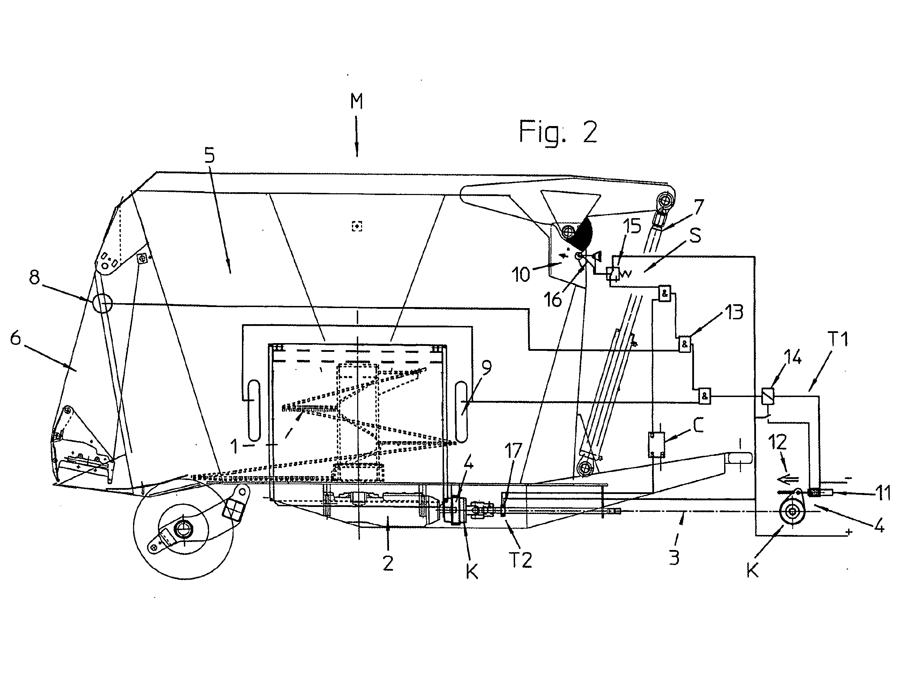

Der Mischwagen M weist einen hier oben offenen Behälter 5 mit einer heckseitigen Ladeschwinge 6 auf, die über einen hydraulischen Stellzylinder 7 beim Vorderende des Mischwagens M aus der gezeigten Schließstellung einer hinteren Ladeöffnung in eine angehobene Ladestellung verstellbar ist. Im Heckbereich ist ein Not-Aus-Schalter 8 als Eingeber eines in den Mischwagen S integrierten Sicherheitssystems S (Fig. 2) vorgesehen, bei dessen Betätigung ein Sicherheitsproblem an das Sicherheitssystem S gemeldet wird. An wenigstens einer Seite des Behälters 5 ist eine Austragöffnung vorgesehen, der eine nach außen bewegliche Sicherheitsabdeckung 18 zugeordnet ist. Am Boden des Behälters 5 ist wenigstens eine, bei dieser Ausführungsform vertikale Mischschnecke 1 als Mischwerkzeug des Mischwagens M drehantreibbar gelagert, unter der sich ein Getriebe 2 befindet, das über einen Antriebsstrang 3 von der Zapfwelle Z aus antreibbar ist. Im Antriebsstrang 3 ist hier direkt eine mechanische (oder fallweise eine hydraulische) Lamellen-Kupplung K angeordnet, die zwischen einer Einrückstellung und einer Ausrückstellung verstellbar ist und eine Kupplungsverstellung 4 aufweist, die beispielsweise am Boden des Mischwagens M abgestützt ist. Das Sicherheitssystem weist eine Steuerung 10 auf, die (Fig. 2) einen Mischschnecken-Antriebsfreigabeteil T1 und einen Mischschnecken-Stillstands-Einstellund/oder -überwachungsteil T2 umfasst. Mit dem Mischschnecken-Antriebsfreigabeteil T1 lässt sich durch Einrücken der Kupplung K die stillgesetzte Mischschnecke wieder antreiben. Durch den Mischschnecken-Stillstands-Einstell- und/oder Überwachungsteil T2 lässt sich der Stillstand der Mischschnecke 1 herstellen und/oder überwachen, um beispielsweise ein automatisches Wiederanlaufen der Mischschnecke oder ein langsames Weiterdrehen unter einem Restdrehmoment zu verhindern.

Das Sicherheitssystem S in Fig. 2 weist eine hier elektronische oder elektrische Steuerung C auf, an die direkt oder indirekt die Geber angeschlossen sind, mit denen ein Sicherheitsproblem gemeldet wird. Dies ist in den Fig. 1 und 2 der erwähnte Not-Aus-Schalter 8, ferner ein Geber 9, der die Öffnungsstellung der Sicherheitsabdeckung 18 überwacht, und schließlich ein mechanischer Geber 10, der ab Erreichen einer bestimmten Schwenklage der Ladeschwinge 6 selbsttätig anspricht.

Die Steuerung C ist so ausgelegt, dass bei Melden eines Sicherheitsproblems bei der Ausführungsform der Fig. 1 und 2 die Kupplung K mittels der Kupplungsverstellung 4 in die Ausrückstellung geschaltet und der Antriebsstrang zur Mischschnecke 1 unterbrochen und gleichzeitig die Übertragung eines Restdrehmoments an die Mischschnecke 1 unterdrückt wird. Die Steuerung C ist femer so ausgelegt, dass nach Stillsetzen der Mischschnecke 1 die Mischschnecke ausschließlich wieder angetrieben werden kann, nachdem zuvor die Zapfwelle Z abgestoppt wurde, wobei bis zur Freigabe der absolute Stillstand der Mischschnecke 1 eingestellt und/oder überwacht wird.

In dem Sicherheitssystem S in Fig. 2 betätigt der mechanische Geber 10 über einen Hebelmechanismus einen an Spannung liegenden elektrischen Schalter 5, sobald der Stellzylinder 7 die Ladeschwinge 6 bis in eine Position angehoben hat, in der gefährlich freier Zutritt zum Inneren des Behälters 5 bzw. zur Mischschnecke entsteht. Über elektrische Verknüpfungsglieder 13 wird nach Betätigen des Schalters 15 ein Relais 14 betätigt, das einen Magneten erregt oder entregt, mit dem ein Federspeicher-Aktuator 11 der Kupplungsverstellung 4 aktiviert wird, um die Kupplung K in die Ausrückstellung zu schalten, und zwar mittels einer mechanischen Bremse, mit der dann weiterhin auch die Übertragung eines Restdrehmoments an die Mischschnecke 1 unterdrückt wird. Auch die weiteren Geber 8, 9, und gegebenenfalls weitere, nicht gezeigte Geber von anderen sicherheitsrelevanten Komponenten des Mischwagens M, sind über Verknüpfungsglieder 13 parallel an das Relais 14 angeschlossen. Ferner ist bei der elektrischen Ausbildung des Sicherheitssystems S in Fig. 2 ein Drehsensor 17 an die Steuerung C angeschlossen, der der Steuerung C meldet, ob bzw. dass der Antriebsstrang 3 bzw. die Zapfwelle Z steht, oder nicht. Diese Information wird beispielsweise benutzt, um zu verhindern, dass die Kupplung K wieder eingerückt wird, beispielsweise sobald die Ladeschwinge 6 wieder ein sichere Stellung abgesenkt wurde und somit das Schaltsignal des Schalters 15 nicht mehr anläge. Solange der Drehsensor 17 eine Drehbewegung des Antriebsstranges 3 meldet, gibt die Steuerung C über ein Verknüpfungsglied ein entsprechendes Signal an das Relais 14, mit dem die Kupplung K ausgerückt gehalten und die Übertragung eines Restdrehmoments an die Mischschnecke 1 unterbunden wird. Selbst wenn also das Sicherheitsproblem durch die Rückstellung der Ladeschwinge 6 theoretisch beseitigt wäre, wird die Mischschnecke 1 dennoch solange nicht angetrieben, bis zuvor die Zapfwelle Z stillgesetzt ist, was der Drehsensor 17 an die Steuerung C meldet, worauf diese das Relais 14 freigibt und die Kupplungsverstellung 14 die Bremse der Kupplung löst, beispielsweise in Richtung des Pfeils 12, z.B. durch Entregen oder Erregen des Magneten des Federspeicheraktuators 11. Auf diese Weise ist sichergestellt, dass nicht nur eine Zurückverstellung der sicherheitsrelevanten Komponente, beispielsweise der Ladeschwinge 6 oder der Sicherheitsabdeckung 18 zum automatischen Wiederanlaufen der Mischschnecke 1 führen kann, sondern zuerst die Zapfwelle Z stillgesetzt werden muss, was bewusst zu erfolgen hat, und somit die Wahrscheinlichkeit erhöht, das zuvor überprüft wird, ob das zuvor zum Abschalten führende Sicherheitsproblem auch tatsächlich beseitigt ist.

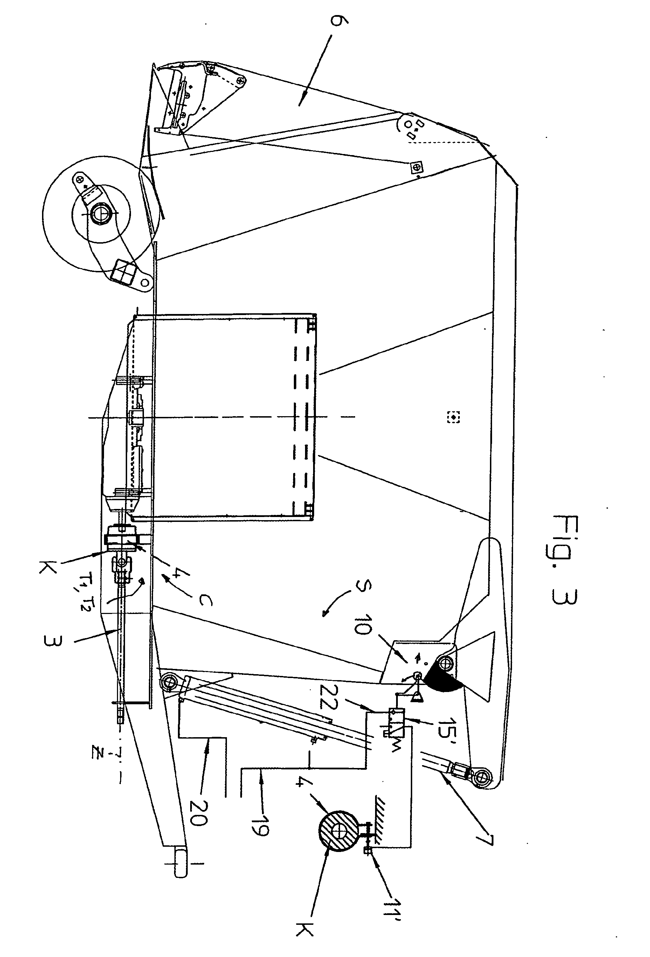

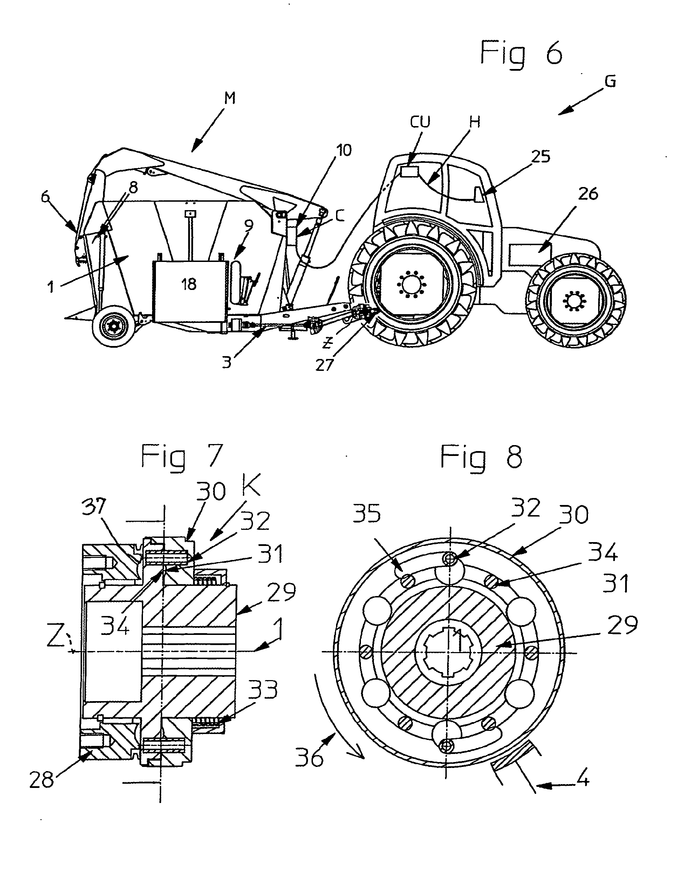

Die Ausführungsform des Mischwagens M von Fig. 3 unterscheidet sich von der in Fig. 2 durch ein hydromechanisches Sicherheitssystem S, dessen Mischschnecken-Antriebsfreigabeteil D1 und Mischschnecken-Stillstandseinstell- und/oder -überwachungsteil T2 in die Kupplung K bzw. die Kupplungsverstellung 4 eingegliedert sind, wie im Detail anhand der Fig. 7 und 8 erläutert wird.

Der hubabhängige mechanische Geber 10 betätigt ein Schaltventil 15', das normalerweise in der Absperrstellung gehalten wird, in eine Durchgangsstellung, sobald beispielsweise die Ladeschwinge 6 eine kritische Öffnungsposition erreicht hat. An das Schaltventil 15' sind (hier nicht dargestellt) parallel auch weitere Geber 8, 9 angeschlossen. Diese Geber können, gegebenenfalls mechanisch, auch auf den mechanischen Geber 10 einwirken. Der hydraulische Stellzylinder 7 der Ladeschwinge ist an Hydraulikleitungen 19, 20 angeschlossen und wird beispielsweise durch eine Druckerhöhung in der Hydraulikleitung 19 eingefahren, um die Ladeschwinge 6 anzuheben. Der Hebedruck bzw. der Systemgrunddruck werden über eine Zweigleitung 22 und das Schaltventil 15' auf einen Hydraulikzylinderaktuator 11' der Kupplungsverstellung 4 übertragen, um die Kupplung K auszurücken und ausgerückt zu halten, beispielsweise durch Abbremsen der Kupplung K. Gleichzeitig ist die Kupplung K so ausgelegt, dass sie in keinem Fall selbsttätig wieder einrückt, falls beispielsweise die Kupplungsverstellung 4 bei Umstellen des Schaltventils 15' wieder deaktiviert wird, und zwar solange, bis zuvor die Zapfwelle Z abgestoppt wurde. Erst nach Abstoppen der Zapfwelle Z wird die Kupplung K eingerückt, so dass danach durch erneutes Antreiben der Zapfwelle Z auch die Mischschnecke 1 wieder angetrieben werden kann.

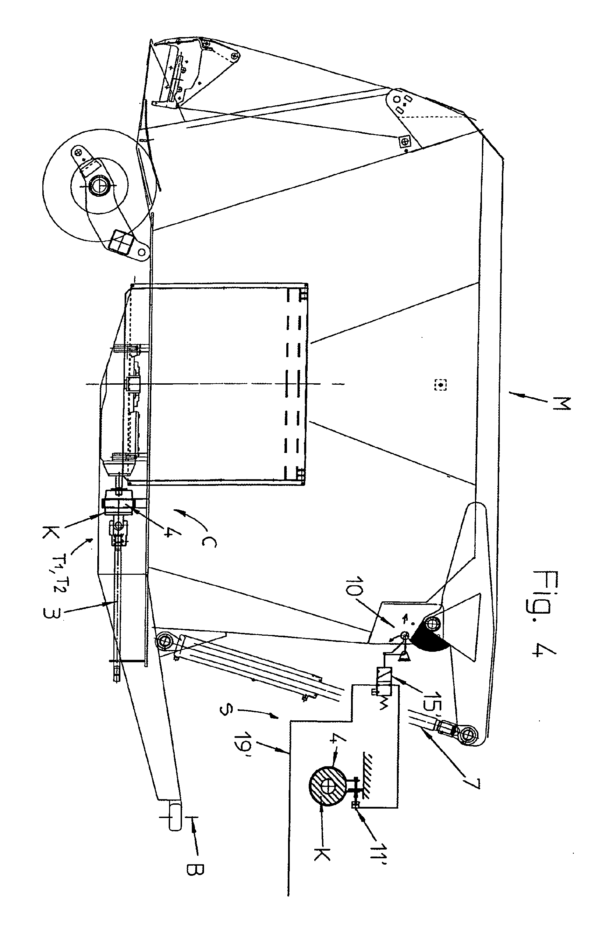

Die Ausführungsform des Mischwagens in Fig. 4 ist ähnlich der von Fig. 3. Unterschiedlich ist nur, dass die Kupplungsverstellung 4 mit dem Schaltventil 15 eine Hydraulikversorgung von Seiten des Schleppers B über die Leitung 19' nur für das Sicherheitssystem S aufweist. Die Steuerung und die beiden Teile T1,T2 sind hier wiederum in die Kupplung K bzw. die Kupplungsverstellung 4 eingegliedert. Weiterhin ist es möglich, das Schaltventil 15' selbsthaltend auszubilden, so dass es nach einer Verstellung in die Durchgangsstellung die Durchgangsstellung hält, selbst wenn der mechanische Geber nach Zurückverstellen der Ladeschwinge nicht mehr aktiv sein sollte. Das Schaltventil 15' wird dann beispielsweise über einen separat erzeugten Befehl in die Absperrstellung umgeschaltet, um die Bremse der Kupplungsverstellung 4 zu lösen, wenn zuvor die Zapfwelle Z abgestoppt wurde, was auch zum Einrücken der Kupplung K erforderlich ist.

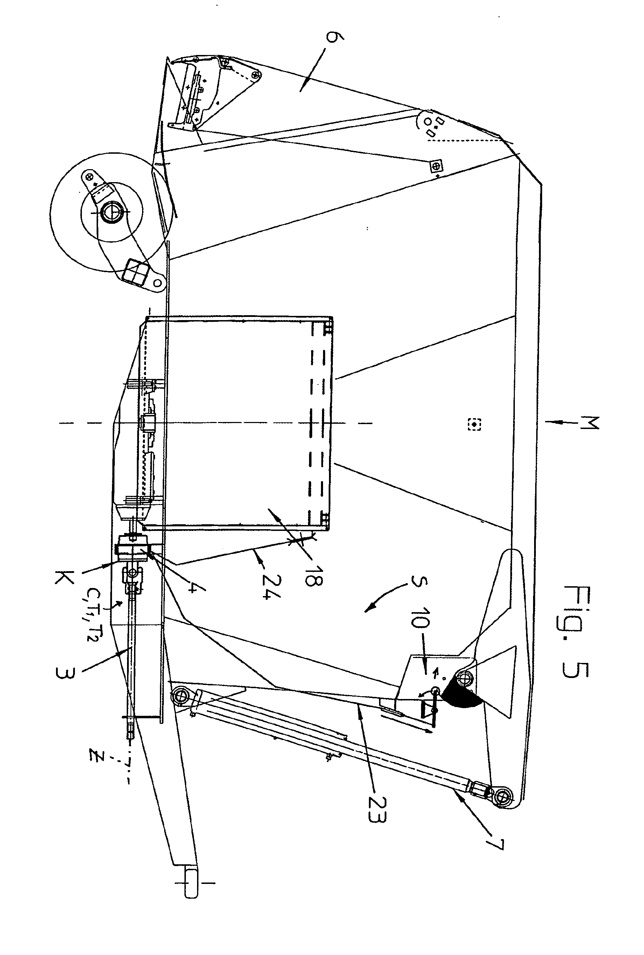

Fig. 5 verdeutlicht eine mechanische Ausführung des Sicherheitssystems S, bei dem die Steuerung C und die Teile T1 und T2 in die Kupplung K bzw. die Kupplungsverstellung 4 eingegliedert sind. Der mechanische Geber 10 und der hier auch mechanische Geber 9 sind über Kabel oder Gestänge 23, 24 mit der Kupplungsverstellung 4 verbunden. Gegebenenfalls ist eine nicht dargestellte Steuerung vorgesehen, die die Kupplungsverstellung 4 solange aktiviert hält (die Bremse, ein Klinkengesperre oder eine andere Art eines Aktuators) bis nach einer Sicherheitsabschaltung auch die Zapfwelle abgestoppt wurde, bzw., um durch weiteres Abbremsen der Kupplung K die Übertragung eines Restdrehmoments an die Mischschnecke 1 zu unterbinden. Für den Fall, dass die Kupplung K mit restdrehmomentfreier Ausrückstellung ausgebildet ist, ist eine solche Steuerung entbehrlich, da die Kupplung dann ohnedies erst wieder einrückt, wenn die Zapfwelle abgestoppt wird, und bei bis dahin laufender Zapfwelle bzw. angetriebenem Antriebsstrang 3 ohnedies kein Restdrehmoment an die Mischschnecke 1 übertragen wird. Weitere, nicht gezeigte Geber können ebenfalls über Kabel oder Gestänge an die Kupplungsverstellung 4 angeschlossen sein.

Fig. 6 zeigt schematisch ein Gespann G aus dem Mischwagen M und dem Schlepper B. Der Mischwagen M ist an die Zugkupplung des Schleppers B angeschlossen und enthält das Sicherheitssystem S, das hier zum Teil auch in den Schlepper B implementiert sein kann. An die im Mischwagen M beispielsweise enthaltene Steuerung C sind die Geber 10, 9 für die Ladeschwinge 6 und die Sicherheitsabdeckung 18 und auch der Not-Aus-Schalter als weiterer Geber 8 angeschlossen. Die Zapfwelle Z ist mit dem Antriebsstrang 3 zur Mischschnecke 1 permanent verbunden. Es kann ein Getriebe vorgesehen sein. Dies ist jedoch nicht zwingend erforderlich. Die Zapfwelle Z wird aus einem Getriebe 27 des mit einem Antriebsmotor 26 ausgestatteten Schleppers B angetrieben. Der Schlepper B enthält ein BUS-System H, beispielsweise ein ISO-BUS-System mit einer zentralen Rechnereinheit CU und einem Steuerpaneel 25. Das BUS-System H ist beispielsweise generell für einzelne Komponenten im Schlepper B vorgesehen. Das BUS-System H bzw. der zentrale Rechner CU sind so programmiert, dass bei Meldung eines Sicherheitsproblems im Mischwagen M in jedem Fall die Zapfwelle Z des Schleppers B abgestoppt wird und solange abgestoppt bleibt, bis ein aufgetretenes Sicherheitsproblem zuverlässig beseitigt ist. Zu diesem Zweck kann die Steuerung C an das BUS-System H angeschlossen werden, um die Anwesenheit des Mischwagens M und gegebenenfalls auch den Mischwagentyp für das BUS-System H zu identifizieren, und ein aufgetretenes Sicherheitsproblem zu melden. Alternativ ist es möglich, im Steuerpaneel 25 bei Anschließen des Mischwagens M manuell einzugeben, um welchen Mischwagentyp es sich handelt. Die Teile T1, T2 sind sozusagen als Programmroutinen im BUS-System H abgelegt und werden dann in Bereitstellung gebracht, wenn entsprechende Eingaben in dem Steuerpaneel 25 gemacht werden, oder die Steuerung C des Mischwagens entsprechende Informationen bereitstellt.

Tritt ein Sicherheitsproblem auf, so dass einer der Melder 8, 9 oder 10 anspricht, dann stellt das BUS-System H sofort die Zapfwelle Z still. Die Mischschnecke 1 wird nicht mehr weiter angetrieben. Das Sicherheitssystem S kann so ausgelegt werden, dass die Zapfwelle Z wieder angetrieben wird, sobald die Meldung des jeweiligen Gebers verschwindet, oder erst nachdem am Steuerpaneel 25 ein entsprechender Rücksetzbefehl gegeben wird. Im Übrigen kann der Mischwagen M für seine einzelnen Komponenten ebenfalls ein mit dem BUS-System H kompatibles BUS-System aufweisen, so dass die BUS-Systeme miteinander kommunizieren können.

Die in den Fig. 1 bis 5 gezeigte mechanische Kupplung K ist entweder eine Kupplung entsprechend den Fig. 7 und 8, oder eine nicht im Detail hervorgehobene hydraulische Lamellenkupplung, die dann zweckmäßig in das Getriebe 2 oder in ein weiteres Getriebe innerhalb des Antriebsstranges 3 eingegliedert wird.

Die mechanische Kupplung der Fig. 7 und 8 weist ein mit der Zapfwelle Z koppelbares Eingangsglied 28, z.B. einen Antriebsring, auf, der auf einem mit der Mischschnecke 1 gekuppelten Ausgangsglied 29 drehbar gelagert ist. Auf dem Ausgangsglied 29 ist ferner ein Schaltglied 30, z. B. eine Steuerscheibe, angeordnet, die relativ zum Ausgangsglied 29 zwischen einer Einrückstellung und einer Ausrückstellung verdrehbar ist, wobei die Einrück- und die Ausrückstellungen definiert sind durch den Eingriff eines Anschlaggliedes 32 in eine in Umfangsrichtung begrenzte Ausnehmung 35. Das Schaltglied 30 wird durch eine auf dem Ausgangsglied 29 angeordnete Rückstellfeder in Richtung zur Einrückstellung beaufschlagt. Die Rückstellfeder 33 ist zweckmäßig eine Drehfeder. Zwischen dem Eingangs- und dem Ausgangsglied sind ferner Übertragungskörper 34, z.B. Kugeln, vorgesehen, die im Umfangsrichtung verteilt in Ausnehmungen des Ausgangsgliedes 29 sitzen und durch das Schaltglied 30 in dessen Einrückstellung auch in einen Eingriff mit entsprechenden Ausnehmungen im Eingangsglied 28 gezwungen werden, so dass zwischen dem Eingangsglied und dem Ausgangsglied 29 das Drehmoment übertragen wird. Wird nun das Schaltglied 30 in die Ausrückstellung verstellt, was beispielsweise durch die Kupplungsverstellung 4, z.B. eine Bremse, bewirkt wird, die am Außenumfang des Ausgangsgliedes 29 angreift, dann werden im Schaltglied 30 vorgesehene Ausweichhohlräume 31 mit den Übertragungskörpern ausgerückt, die aus den Ausnehmungen des Eingangsgliedes 28 austreten und das Eingangsglied 28 vom Ausgangsglied 29 trennen. Da die Übertragungskörper 34 so in den Ausweichhohlräumen 31 aufgenommen werden, dass sie keinerlei Kontakt mehr mit dem Eingangsglied 28 aufweisen, wird auch kein Restdrehmoment auf das Ausgangsglied 29 mehr ausgeübt, unabhängig davon, ob diese in der Ausrückstellung des Schaltgliedes 30 abgebremst oder blockiert ist, oder nicht. Die Kupplung K ist demzufolge in der Ausrückstellung restdrehmomentfrei ausgebildet.

Solange sich das Eingangsglied 28 relativ zum Ausgangsglied 29 dreht, d.h., solange sich die Zapfwelle Z dreht, können die Übertragungskörper 34 nicht in die Ausnehmungen des Eingangsgliedes 28 zurückkehren, wobei die Drehrichtung in Fig. 8 mit 36 angedeutet ist, da die Kraft der Rückstellfeder 33 nicht ausreicht, das Schaltglied 30 in die Einrückstellung zurückzudrehen. Erst nachdem die Zapfwelle Z vollständig abgestoppt ist, reicht die Kraft der Rückstellfeder 33 aus, das Schaltglied 30 nach Lösen der Bremse der Kupplungsverstellung 4 in die Einrückstellung zurückzudrehen und die Übertragungskörper 34 wieder in die Ausnehmungen 37 des Eingangsgliedes 28 zu schieben und die Kupplung K wieder einzurücken. Das Verstellen der Kupplung K zwischen der Einrück- und der Ausrückstellung könnte auch über ein am Schaltglied 30 angreifendes Klinkengesperre oder einen Aktuator anderer Bauweise bewirkt werden.

## Patentansprüche

1. Sicherheitssystem eines selbstladenden Mischwagens (M), insbesondere eines Gespannes (G) aus einem Schlepper (B) und einem selbstladenden Mischwagen (M) mit wenigstens einer über die Zapfwelle (Z) des Schleppers (B) antreibbaren, vorzugsweise vertikalen, Mischschnecke (1) im Mischwagen (M), wobei wenigstens eine sicherheitsrelevante Komponente zumindest des Mischwagens (M) über einen Geber mit einer Steuerung (C) des Sicherheitssystems (S) zum Stillsetzen der Mischschnecke (1) bei einem Sicherheitsproblem verbunden ist, **dadurch gekennzeichnet, dass** die Steuerung (C) einen Mischschnecken-Antriebsfreigabeteil (T1) und einen Mischschnecken-Stillstands-Einstell- und/oder -überwachungsteil (T2) aufweist, und dass mit der Steuerung (C) nach Stillsetzen der Mischschnecke (1) der Antrieb für die Mischschnecke (1) ausschließlich nach vorhergehendem Abstoppen der Zapfwelle (Z) freigebbar und bis zur Freigabe der absolute Stillstand der Mischschnecke (1) einstellbar und/oder überwachbar ist.

2. Sicherheitssystem nach Anspruch 1, **dadurch gekennzeichnet, dass** die beiden Teile (T1, T2) in eine Programmsteuerung (CU) eines BUS-Systems, insbesondere eines ISO-BUS-Systems (H), vorzugsweise des Schleppers (B), eingegliedert und zumindest durch eine elektrische Meldung eines Sicherheitsproblems aktivierbar sind.

3. Sicherheitssystem nach Anspruch 2, **dadurch gekennzeichnet, dass** die beiden Teile (T1, T2), vorzugsweise softwareseitige, Programmroutinen aufweisen, die durch automatische oder manuelle Identifikations-Eingaben zum Mischwagen (M) einstellbar sind.

4. Sicherheitssystem nach Anspruch 1, **dadurch gekennzeichnet, dass** das Sicherheitssystem (S) eine mechanische, zwischen einer Einrück- und einer AusrückStellung verstellbar Kupplung (K) in einem Antriebstrang (3) von der Zapfwelle (Z) zur Mischschnecke (1) umfasst, und dass der Antriebsfreigabeteil (T1) und der Einstell- bzw. Überwachungsteil (T2) in die Kupplung (K) und/oder die Kupplungs-Verstellung (4) eingegliedert sind, so dass die Kupplung (K) aus der Lösestellung nur bei gestoppter Zapfwelle in die Einrückstellung bringbar und/oder ein Restdrehmoment von der Kupplung (K) zur Mischschnecke (1) unterdrückbar sind.

5. Sicherheitssystem nach Anspruch 4, **dadurch gekennzeichnet, dass** die mechanische Kupplung (K) direkt im Antriebsstrang zwischen der Zapfwelle (Z) und der Mischschnecke (1) angeordnet ist, und dass die Kupplungsverstellung (4) am Mischwagen (M) abgestützt ist.

6. Sicherheitssystem nach Anspruch 4, **dadurch gekennzeichnet, dass** mit der Steuerung (C) als Kupplungsverstellung (4) eine Bremse, oder Klinkensperre oder ein Aktuator zum Verstellen der Kupplung (K) verbunden ist.

7. Sicherheitssystem nach Anspruch 6, **dadurch gekennzeichnet, dass** die Bremse oder Klinkensperre auch die Mischschnecke (1) stillsetzt und ein Restdrehmoment der ausgerückten Kupplung (K) aufnimmt.

8. Sicherheitssystem nach Anspruch 1, **dadurch gekennzeichnet, dass** das Sicherheitssystem (S) eine zwischen Einrück -und Ausrückstellungen verstellbar hydraulische Lamellenkupplung (K) im Antriebsstrang zur Mischschnecke und einen an die Steuerung (C) angeschlossenen Zapfwellen-Drehsensor (17) umfasst, sowie gegebenenfalls eine Restdrehmoment-Bremse.

9. Sicherheitssystem nach Anspruch 8, **dadurch gekennzeichnet, dass** die hydraulische Lamellenkupplung (K) in einem Getriebe im Antriebsstrang zur Mischschnecke (1) angeordnet ist.

10. Sicherheitssystem nach Anspruch 1, **dadurch gekennzeichnet, dass** an die Steuerung (C) über Signalgeber mehr als nur eine sicherheitsrelevante Komponente zumindest des Mischwagens (M) parallel angeschlossen sind, z.B. die Ladeklappe (6), die Sicherheitsabdeckung (18) einer Dosieröffnung, ein Not-Aus-Schalter (8) oder dgl.

11. Sicherheitssystem nach Anspruch 4, **dadurch gekennzeichnet, dass** die mechanische Kupplung (K) mit restmomentfreier Ausrückstellung ausgebildet ist.

12. Sicherheitssystem nach wenigstens einem der Ansprüche 4 bis 7, **dadurch gekennzeichnet, dass** die mechanische Kupplung (K) ein mit der Zapfwelle (Z) gekoppeltes Eingangsglied (28), ein mit der Mischschnecke (1) gekoppeltes Ausgangsglied (29) und in die Glieder (28, 29) eingreifende, verlagerbare Übertragungskörper (34) aufweist, dass ein auf dem Ausgangsglied (29) angeordnetes Schaltglied (30) zwischen einer Einrückstellung und einer Ausrückstellung zum Freischalten von Ausweichräumen (31) für die Übertragungskörper (34) verstellbar ist, dass das Schaltglied (30) durch eine Rückstellfeder (33) zur Einrückstellung beaufschlagt ist, und dass die Bremse, die Klinkensperre oder der Aktuator am Schaltglied (30) zum Angriff bringbar ist, wobei, vorzugsweise, die Rückstellfeder (33) eine Drehfeder ist.

13. Sicherheitssystem nach Anspruch 4 oder 8, **dadurch gekennzeichnet, dass** die Kupplungsverstellung (4) elektrisch, z.B. über einen magnetbetätigten Federspeicher (11), hydraulisch, z.B. über einen Hydraulikzylinderaktuator (11'), oder mechanisch, z.B. über Gestänge oder Seilzüge (23, 24), betätigbar ist.

14. Sicherheitssystem nach Anspruch 13, **dadurch gekennzeichnet, dass** der Hydraulikzylinder-Aktuator (11') über ein Schaltventil (15') an eine Hydraulikversorgung (19') nur des Sicherheitssystems oder parallel an die Hydraulikversorgung (19') eines Stellzylinders (7) einer Komponente (6), z.B. der Ladeschwinge, des Mischwagens (M) angeschlossen ist.

15. Sicherheitssystem nach Anspruch 14, **dadurch gekennzeichnet, dass** das Schaltventil (15') mittels eines mechanischen Gebers hubabhängig von der Komponente (6) des Mischwagens betätigbar ist.
